# EUROPÄISCHE PATENTSCHRIFT

(11) **EP 3 046 690 B1**
(45) Veröffentlichungstag und Bekanntmachung des Hinweises auf die Patenterteilung: **14.06.2017**
(21) Anmeldenummer: 14758313.2
(22) Anmeldetag: 20.08.2014
(51) Int. Cl.: B21B 35/14

(54) **LÖSBARE KUPPLUNGSNABE FÜR ARBEITSWALZEN VON WALZWERKANTRIEBEN MIT AUTOMATISCHER NACHSCHMIERUNG**
RELEASABLE COUPLING HUB FOR WORKING ROLLS OF ROLLING-MILL DRIVES HAVING AUTOMATIC RELUBRICATION
MOYEU AMOVIBLE POUR CYLINDRES DE TRAVAIL D'ORGANES D'ENTRAÎNEMENT DE LAMINOIR À RELUBRIFICATION AUTOMATIQUE

(30) Priorität: 19.09.2013 DE 102013218791; 24.10.2013 DE 102013221593
(43) Veröffentlichungstag der Anmeldung: 27.07.2016
(73) Patentinhaber: Voith Patent GmbH, 89522 Heidenheim (DE)
(72) Erfinder: GRAWENHOF, Peter, 89547 Dettingen (DE); MAIER, Dieter, 89537 Giengen (DE); STOCKER, Jürgen, 73466 Lauchheim (DE); BAUR, Leonhard, 89564 Nattheim-Steinweiler (DE)
(86) Internationale Anmeldenummer: PCT/EP2014/067737
(87) Internationale Veröffentlichungsnummer: WO 2015/039827

(56) Entgegenhaltungen:
- EP-A2- 0 865 837
- WO-A1-2006/108596
- DE-A1- 2 811 607
- DE-A1-102011 086 094
- US-A- 2 925 885
- US-A- 3 109 513
- US-A- 3 456 760

## Beschreibung

Die Erfindung bezieht sich auf eine lösbare Kupplungsnabe für eine Arbeitswalze einer Walzenstrecke mit einer Aufnahmegeometrie für einen an der Arbeitswalze koaxial angeordneten Walzenzapfen zur Übertragung eines Drehmomentes von einem Antrieb auf eine Arbeitswalze, wobei die Verbindung zwischen dem Walzenzapfen und der Aufnahmegeometrie als ein Form- und/oder Kraftschluß ausgebildet ist.

Ein Walzwerkantrieb besteht üblicherweise aus paarweise angeordneten Arbeitswalzen. Um die Arbeitswalzen in Rotation zu versetzen, ist ein Antrieb vorgesehen, der das von dem Antrieb bereitgestellte Drehmoment über eine Kupplungsnabe auf die Arbeitswalze überträgt. Die Arbeitswalze selbst weist koaxial angeordnet einen Walzenzapfen auf, der form- und/oder kraftschlüssig mit der Kupplungsnabe verbunden ist. Eine solche Verbindung wird auch Trefferverbindung genannt, wobei die Kupplungsnabe als Treffer verstanden wird.

Bei den bekannten Antriebsvorrichtungen, wie sie zuvor beschrieben sind, ist vorgesehen, die Kupplungsnabe mit Spiel auf den Walzenzapfen der Arbeitswalze aufzusetzen, sodass dieses leicht wieder davon gelöst werden kann. Da die Walzen regelmäßig nachgeschliffen und hierfür ausgewechselt werden müssen, wird zwischen der Arbeitswalze und der Kupplungsnabe eine solche Verbindungstechnik benötigt, die ein schnelles Verbinden und Lösen ermöglicht. Die aus dem Stand der Technik bekannte lösbare Verbindung besteht aus der Kupplungsnabe, die auf den Walzenzapfen aufgeschoben wird. Die Kupplungsnabe ist über eine Gelenkspindel mit dem Antrieb gekoppelt. Die Kupplungsnabe weist eine Aufnahmegeometrie auf, die über den Walzenzapfen geschoben werden kann. Da beispielsweise der an sich im Querschnitt runde Walzenzapfen plane Bereiche aufweist, die diametral gegenüberliegen und die Aufnahmegeometrie ebenfalls korrespondierende Bereiche, ist ein Formschluß mit vorgesehenem Spiel gegeben.

Durch das benötigte Spiel, die hohen Belastungen sowie die Umgebungsbedingungen weisen derartige Verbindungen einen starken Verschleiß auf.

Vor dem Einfahren des Walzenzapfens in die Aufnahmegeometrie wird die Kupplungsnabe in der Regel mit Schmierstoff beaufschlagt. Die Schmierung dient zur Minderung der Reibung zwischen der Aufnahmegeometrie und dem Walzenzapfen und vermindert somit auch Tribokorrosion und Abrieb an den entsprechenden Kontaktflächen. Das Aufbringen des Schmierstoffes wird in der Regel per Hand durchgeführt.

Die zuvor beschriebene Vorgehensweise bringt den Nachteil mit sich, dass die Verbindung zwischen dem Walzenzapfen und der Kupplungsnabe pro Walzenwechsel nur ein einziges Mal mit Schmierstoff beaufschlagt werden kann. Die Beaufschlagung erfolgt unmittelbar bei einem entsprechenden Wechsel der Arbeitswalze.

Ein weiterer Nachteil des Standes der Technik besteht darin, dass aufgrund dessen, dass die Aufnahmegeometrie büchsenartig den Walzenzapfen umgibt, der auf dem Walzenzapfen aufgetragene Schmierstoff beim Einführen in die Aufnahmegeometrie abgestriffen wird, sodass nur eingeschränkt an einigen Stellen Schmierstoff vorhanden ist, aber nicht an allen Stellen, an denen dieser benötigt wird.

Da die Kupplungsnabe, das heißt die Verbindung zwischen dem Walzenzapfen und der Aufnahmegeometrie während des Betriebes starkem Spritzwasser ausgesetzt ist, wird der Schmierstoff im Betrieb aus der Aufnahmegeometrie ausgewaschen, sodass nur noch geringere Schmierstoffmengen oder sogar gar kein Schmierstoff auf dem Walzenzapfen bzw. in der Aufnahmegeometrie vorhanden ist.

Um ein problemloses Ein- und Ausfahren des Walzenzapfens, der vorzugsweise oder in vielen Ausführungsformen als Flachzapfen ausgebildet ist, zu gewährleisten, ist zwischen dem Flachzapfen und der Kupplungsnabe ein Spiel vorgesehen. Es besteht jedoch für den Betrieb die Forderung, das Spiel möglichst gering zu halten, um Verschleiß und dynamische Effekte zu minimieren.

Aus der US 3,109,513 ist eine Schmiereinrichtung für Walzwerkspindeln bekannt. Mittels eines stationären äußeren Ringes wird mittels Druckluft Öl zum Schmieren der Verbindung durch Schmiermittelkanäle einer Gelenkverbindung zugeführt.

Aus der EP 0 865 837 A1 ist ein Walzwerkantrieb mit Zahngelenkspindeln und einer Vorrichtung zur Umlaufschmierung bekannt. Für die Schmierung wird Öl durch einen in einem Spindelschaft ausgebildeten Zentralkanal den Zahngelenken zugeführt.

Aus der WO 2006/108596 A1 ist eine Antriebsspindel für den Hauptantrieb eines Walzgerüstes bekannt. Die offenbarte Ausführung betrifft eine Schmierung zwischen der gelenkigen Verbindung von Antriebsspindel und Treffer. Dabei handelt es sich um eine Gelenkverbindung, bei der ein Kippwinkel zulässig ist.

Aus der DE 28 11 607 ist eine Gelenkkupplung bekannt. Diese Gelenkkupplung ist für geringe Winkelverschiebungen ausgelegt. Für eine Schmierung ist eine extern angeordnete Pumpe vorgesehen, die für die Beförderung von Öl unter niedrigem Druck zu den Zähnen 20, 21 vorgesehen ist.

Aus der US 2,925,885 ist ein Schmiermittelsystem, dass eine Schmiermittelquelle mit konstantem Druck aufweist, bekannt. Dieses Schmiermittelsystem ist für die Schmierung einer Gelenkverbindung, bei der eine Winkelveränderung der Bestandteile der Gelenkverbindung zulässig ist, vorgesehen.

Auch bei der US 3,456,760 handelt es sich um eine Gelenkverbindung, die für Winkelbewegungen ausgelegt ist. Die Schmierung wird mittels einer Schmiermittelzufuhr von einem externen Reservoir bereitgestellt.

Aus der DE 10 2011 086 094 A1 ist ein Walzwerksantrieb mit einer Zahngelenksspindel bekannt. Die Zahngelenksspindel ist in einer Verzahnungskammer axial verschiebbar angeordnet. Mindestens eine der Verzahnungskammern ist mit einem Schmiermedium gefüllt.

Die Aufgabe der Erfindung ist es, eine Kupplungsnabe der vorstehenden Art derart weiterzubilden, dass während des Betriebes der Arbeitswalze in der Kupplungsnabe zwischen der Aufnahmegeometrie und dem Walzenzapfen ausreichend Schmierstoff zwischen den Kontaktflächen vorhanden ist, um den Abrieb und den Verschleiß zu reduzieren.

Die Lösung der Aufgabe wird durch den Grundgedanken bereitgestellt, dass innerhalb der Kupplungsnabe Mittel zum Schmieren der Kontaktflächen zwischen dem Walzenzapfen und der Aufnahmegeometrie vorgesehen sind, sodass nachdem der Walzenzapfen in die Kupplungsnabe eingefahren ist bzw. auf den letzten 10% des Einfahrweges, noch Schmierstoff auf die Kontaktflächen eingebracht werden kann.

Um den Verschleiß zwischen dem Walzenzapfen und der Aufnahmegeometrie der Kupplungsnabe aufgrund des vorgesehenen Spiels zwischen diesen beiden Elementen gering zu halten, ist es notwendig, dass die Kontaktflächen mit Schmierstoff beaufschlagt sind. Da durch die Ausführungsformen gemäß dem Stand der Technik, der auf dem Walzenzapfen aufgetragene Schmierstoff durch das Einführen des Walzenzapfens in die Kupplungsnabe überwiegend abgestriffen wird, wird vorteilhafterweise vorgeschlagen, dass innerhalb der Kupplungsnabe oder im Bereich des angrenzenden Gelenks ein Schmierstoffreservoir vorhanden ist, das derart ausgelegt ist, dass dieses vorzugsweise dauerhaft während des Betriebs der Arbeitswalze Schmierstoffe an die Kontaktflächen abgibt.

Vorteilhafterweise wird dies dadurch gelöst, dass als Mittel ein Schmiermittelreservoir innerhalb der Kupplungsnabe angeordnet ist, das zumindest während des Betriebs, vorzugsweise bereits beim Einfahren des Walzenzapfens in die Aufnahmegeometrie der Kupplungsnabe oder auch während des Betriebs Schmierstoff zumindest im Bereich der Kontaktflächen abgibt.

Um ein Abgeben von Schmiermittel aus dem Schmiermittelreservoir zu ermöglichen, können unterschiedliche Wege vorgesehen sein. Zum einen ist vorgesehen, dass an der Stirnseite des Walzenzapfens ein Kontaktelement vorgesehen ist, das bei dem Einführen des Walzenzapfens in die Aufnahmegeometrie der Kupplungsnabe das Schmiermittelreservoir kontaktiert und dadurch entsprechender Druck auf das Schmiermittelreservoir ausgeübt wird, sodass Schmiermittel über ein Ausgabeelement durch vorzugsweise Schmierstoffkanäle, die innerhalb der Aufnahmegeometrie vorgesehen sind, an die Kontaktflächen gelangt.

Alternativ ist auch ein externes Schmierstoffreservoir möglich, das mit dem innerhalb der Kupplungsnabe angeordneten Schmierstoffreservoir fluidmäßig verbunden ist. Die fluidmässige Verbindung ist deswegen notwendig, falls das innerhalb der Kupplungsnabe vorgesehene Schmiermittelreservoir leer ist und entsprechend nachgefüllt werden muss.

Alternativ kann auch eine händische Nachfüllung vorgesehen sein. In der Regel erfolgt das Auffüllen des integrierten Schmiermittelreservoirs beim Wechsel der Arbeitswalze oder Schmieren der Gelenke der Walzstrecke. Das Volumen des Schmiermittelreservoirs ist dementsprechend festzulegen.

Damit auch während des Betriebes die entsprechende Abgabe von Schmiermittelstoff aus dem Schmiermittelreservoir über die Schmiermittelkanäle an die Kontaktfläche gelangt, ist das Schmiermittelreservoir vorzugsweise mit Druck zu beaufschlagen.

Alternativ können auch Schmiermittelbüchsen vorgesehen werden, die ständig Druck aufbauen, sodass eine regelmäßige Abgabe gewährleistet ist. Ein Druckaufbau kann durch Federbeaufschlagung, aber auch durch pneumatische, hydraulische oder elektro-mechanische Mittel ausgeführt sein. Alternativ kann auch für den Druckaufbau die Rotationsenergie genutzt werden.

Weitere vorteilhafte Ausgestaltungen gehen aus der nachfolgenden Beschreibung, den Zeichnungen sowie den Ansprüchen hervor.

Es zeigen:
- FIG. 1A: eine schematische Darstellung der Verwendung der lösbaren Kupplungsnabe für eine mit einem Antrieb versehene Arbeitswalze einer Walzenstrecke;
- FIG. 1B: eine Prinzipdarstellung des Einführens des Walzenzapfens in eine Kupplungsnabe, gemäß Fig. 1A;
- FIG. 1C: eine stirnseitige Ansicht auf die Kupplungsnabe gemäß Fig. 1B;
- Fig. 1D: eine stirnseitige Ansicht auf die Arbeitswalze mit dem Wellenzapfen und darauf angeordneten Verschleißplatten gemäß Fig. 1B;
- FIG. 2: eine Prinzipdarstellung einer erfindungsgemässen Ausführung eines ersten Ausführungsbeispiels einer lösbaren Kupplungsnabe, gekoppelt auf dem Walzenzapfen der Arbeitswalze;
- FIG. 3: eine Prinzipdarstellung der erfindungsgemässen Ausführung eines zweiten Ausführungsbeispiels einer lösbaren Kupplungsnabe, gekoppelt auf dem Walzenzapfen der Arbeitswalze.

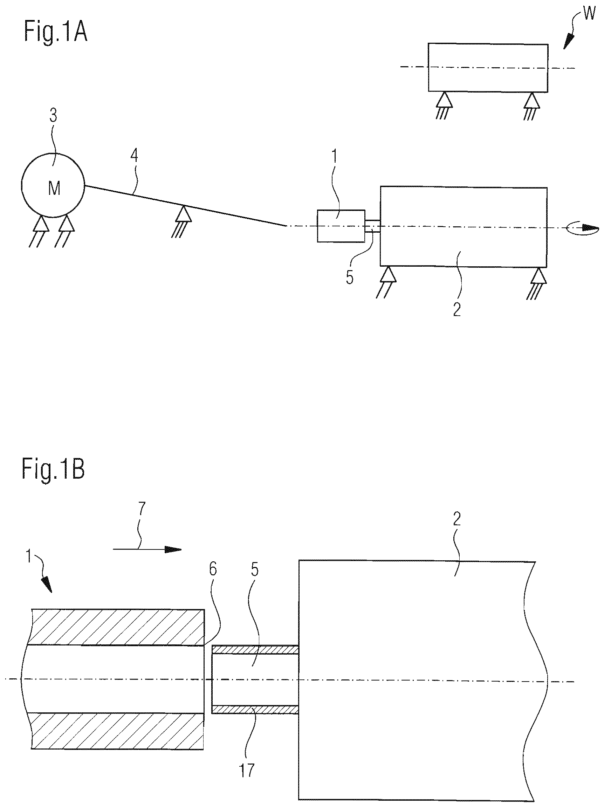

In den Figuren 1A bis 1D ist die Verwendung einer lösbaren Kupplungsnabe 1 dargestellt. Die lösbare Kupplungsnabe 1 ist als Verbindungsglied zwischen einer Arbeitswalze 2 eines Walzenwerksantriebs W und einem Antrieb 3, der wiederum als Kupplungsnabe 1 mit einer Aufnahmegeometrie 6 zwischen dem Antrieb 3 und der Kupplungsnabe 1 eine Gelenkwelle 4 aufweist, dargestellt.

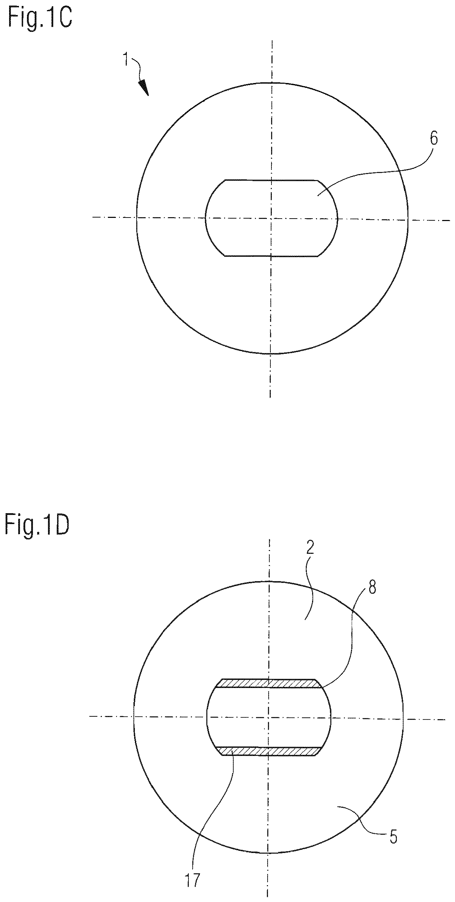

Die Kupplungsnabe 1 ist lösbar an der Arbeitswalze 2 eines nur schematisch dargestellten Walzenwerkantriebs W angeordnet. Koaxial angeordnet weist die Arbeitswalze 2 einen Walzenzapfen 5 auf, dem wie in Fig. 1B und 1C dargestellt, die Aufnahmegeometrie 6 zum Aufstecken der Kupplungsnabe 1 in Pfeilrichtung 7 zugeordnet wird. Der Walzenzapfen 5 selbst, wie er in Fig. 1D dargestellt ist, weist plane Bereiche 8 auf, die diametral gegenüberliegend angeordnet sind. Die Aufnahmegeometrie 6 ist derart ausgelegt, dass der Walzenzapfen 5 mit Spiel aufgenommen werden kann. Zusätzlich können auf den planen Bereichen 8 auswechselbare Verschleißplatten angeordnet sein.

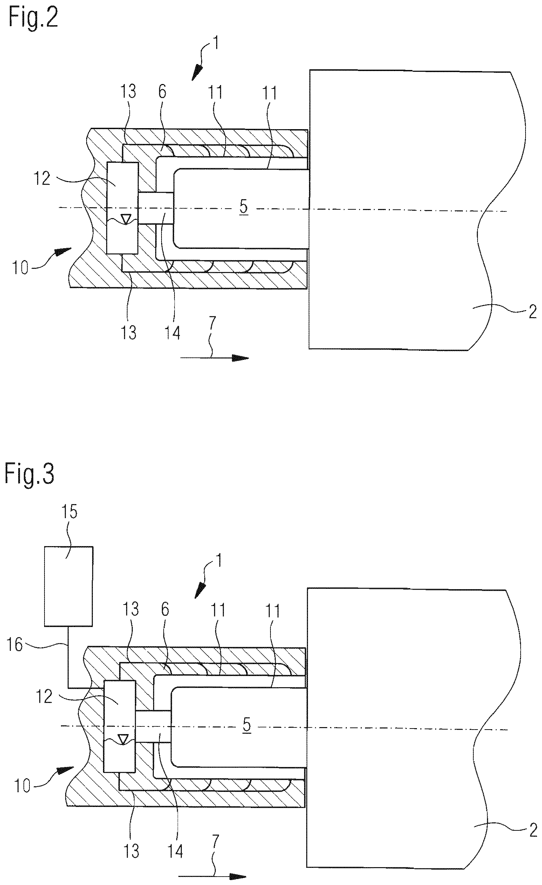

Erfindungsgemäß ist bei dem in Fig. 2 dargestellten Ausführungsbeispiel vorgesehen, dass innerhalb der Kupplungsnabe 1 im Bereich der Aufnahmegeometrie 6 Mittel 10 zum Schmieren von Kontaktflächen 11 zwischen dem Walzenzapfen 5 und dem Aufnahmegeometrie 6 vorgesehen sind.

Sind in der Verbindung Verschleißplatten (wie in Fig. 1 B) vorgesehen, so können auch in diese Mittel zur Schmiermittelverteilung eingebracht werden.

Unter dem Begriff Kontaktflächen 11 sind solche Flächen der Aufnahmegeometrie 6 zu verstehen, die in Berührung und damit in Kontakt mit dem Wellenzapfen 5 gelangen. Da jedoch aus Gründen der einfacheren Handhabung hinsichtlich des Wechsels der Arbeitswalze zwischen der Innenwandung der Aufnahmegeometrie 6 und der Außenwandung des Walzenzapfens 5 ein Spiel vorhanden ist, gelangen die Innenwandung mit der Außenwandung nicht vollständig in Kontakt, sondern es entstehen, je nach Umdrehung und Belastung der Arbeitswalze unterschiedliche Kontaktflächen 11 bzw. Berührungen.

Damit der Verschleiß aufgrund der freien Bewegung der Aufnahmegeometrie 6 der Kupplungsnabe 1 relativ zum Walzenzapfen 5 gering gehalten werden kann, ist das Mittel 10 zum Schmieren derart ausgebildet, dass es ein Schmiermittelreservoir 12 aufweist, das innerhalb der Kupplungsnabe 1 bzw. des angrenzenden Gelenks angeordnet ist. Schmiermittelkanäle 13 führen von dem Schmiermittelreservoir über ein Ausgabeelement (in den Zeichnungen nicht näher dargestellt) an die Kontaktflächen 11, sodass diese entsprechend mit Schmiermittel beaufschlagt werden können.

Um beim Einführen des Walzenzapfes 5 in die Aufnahmegeometrie 6 der Kupplungsnabe 1 Schmiermittel an den Kontaktflächen 11 bereitzustellen, ist an der Stirnseite des Walzenzapfens 5 ein Auslöseelement 14 vorhanden, das beim Einführen in Pfeilrichtung 7 auf das Schmiermittelreservoir 12 drückt, sodass innerhalb des Schmiermittelreservoirs 12 Druck aufgebaut wird, der wiederum bewirkt, dass das Schmiermittel durch die Schmiermittelkanäle 13 an die Kontaktflächen 11 gelangt.

In Fig. 3 ist ein weiteres Ausführungsbeispiel der Erfindung dargestellt. Es unterscheidet sich in Bezug auf Fig. 2 dadurch, dass mit dem Schmiermittelreservoir 12 ein weiteres Schmiermittelreservoir 15 über entsprechende Leitungen 16 fluidmässig verbunden ist. Das weitere Schmiermittelreservoir 15 dient dazu, das Reservoir 12, das innerhalb der Kupplungsnabe 1 angeordnet ist, ständig nachzufüllen.

Aufgrund der technischen Ausgestaltungen der Erfindung ergibt sich somit die Möglichkeit, dass vorteilhafterweise über den gesamten Walzeneinsatz-Zyklus ausreichend Schmierstoff zwischen den Kontaktflächen 11 des Walzenzapfens 5 der Arbeitswalze 2 und der Kupplungsnabe 1 vorhanden ist, um den auftretenden Verschleiß zwischen diesen beiden Elementen zu reduzieren.

Zudem ist der wesentliche Vorteil gegeben, dass auch dann noch Schmierstoff vorhanden ist, wenn der Walzenzapfen 5 bereits in die Aufnahmegeometrie der Kupplungsnabe 1 eingeführt ist. Ferner kann das manuelle Nachfüllen von Schmierstoff entfallen.

### Bezugszeichenliste

### Lösbare Kupplungsnabe für Arbeitswalzen von Walzwerkantrieben mit automatischer Nachschmierung

- 1.: Kupplungsnabe
- 2.: Arbeitswalze
- 3.: Antrieb
- 4.: Gelenkwelle
- 5.: Walzenzapfen
- 6.: Aufnahmegeometrie
- 7.: Pfeilrichtung
- 8.: Plane Bereiche

- 10.: Mittel
- 11.: Kontaktflächen
- 12.: Schmiermittelreservoir
- 13.: Schmierkanäle
- 14.: Auslöseelement
- 15.: weiteres Schmiermittelreservoir
- 16.: Leitungen
- 17.: Verschleißplatten
- W: Walzwerkantrieb

## Patentansprüche

1. Lösbare Kupplungsnabe für eine Arbeitswalze einer Walzenstrecke mit einer Aufnahmegeometrie für einen an der Arbeitswalze koaxial angeordneten Walzenzapfen zur Übertragung eines Drehmoments von einem Antrieb auf die Arbeitswalze, wobei die Verbindung zwischen dem Walzenzapfen in die Aufnahmegeometrie als form- und/oder Kraftschluss ausgebildet ist, derart **dass** innerhalb der Kupplungsnabe (1) Mittel (10) zum Schmieren von Kontaktflächen (11) zwischen dem Walzenzapfen (5) und der Aufnahmegeometrie (6) der Kupplungsnabe (1) vorgesehen sind, wobei das Mittel (10) ein Schmiermittelreservoir (12) aufweist und **dadurch gekennzeichnet, dass** das Schmiermittelreservoir (12) innerhalb der Kupplungsnabe (1) angeordnet ist.

2. Kupplungsnabe nach mindestens einem der vorhergehenden Ansprüche, **dadurch gekennzeichnet, dass** innerhalb der Kupplungsnabe (1) Schmiermittelkanäle (13) vorgesehen sind, die von dem Schmiermittelreservoir (12) zu den Kontaktflächen (11) führen.

3. Kupplungsnabe nach Anspruch 1, **dadurch gekennzeichnet, dass** das Mittel (10) ein Schmiermittelreservoir (12) umfasst, das zumindest mittelbar durch den Walzenzapfen (5) betätigbar ist.

4. Kupplungsnabe nach Anspruch 2, **dadurch gekennzeichnet, dass** das das Schmiermittelreservoir (12) mit einem weiteren Schmiermittelreservoir (15) auffüllbar ist.

5. Kupplungsnabe nach mindestens einem der vorhergehenden Ansprüche, **dadurch gekennzeichnet, dass** die Ausgabe des Schmiermittels aus dem Schmiermittelreservoir (12) durch mechanische Auslösung ausgeführt wird.

6. Kupplungsnabe nach mindestens einem der vorhergehenden Ansprüche, **dadurch gekennzeichnet, dass** eine permanente Schmierbüchse als Schmiermittelreservoir (12) vorgesehen ist, die während des Betriebs das Schmiermittel mit Druck beaufschlagt.

7. Kupplungsnabe nach mindestens einem der vorhergehenden Ansprüche, **dadurch gekennzeichnet, dass** auf dem Walzenzapfen (5) Verschleißplatten (17) angeordnet sind.

8. Kupplungsnabe nach Anspruch 7, **dadurch gekennzeichnet, dass** die Verschleißplatten (17) auswechselbar anordbar sind.

## Claims

1. Releasable coupling hub for a worker roller of a rolling section, having a receptacle geometry for a roller journal that is disposed coaxially on the worker roller, for transmitting a torque from a drive to the worker roller, wherein the connection between the roller journal in the receptacle geometry is configured as form-fit and/or force-fit in such a manner that means (10) for lubricating contact faces (11) between the roller journal (5) and the receptacle geometry (6) of the coupling hub (1) are provided within the coupling hub (1), wherein the means (10) has a lubricant reservoir (12), and
**characterized in that**
the lubricant reservoir (12) is disposed within the coupling hub (1).

2. Coupling hub according to at least one of the preceding claims, **characterized in that** lubricant ducts (13) which lead from the lubricant reservoir (12) to the contact faces (11) are provided within the coupling hub (1).

3. Coupling hub according to Claim 1, **characterized in that** the means (10) comprises a lubricant reservoir (12) which is activatable at least indirectly by the roller journal (5).

4. Coupling hub according to Claim 2, **characterized in that** the lubricant reservoir (12) is capable of being filled by way of a further lubricant reservoir (15).

5. Coupling hub according to at least one of the preceding claims, **characterized in that** dispensing of the lubricant from the lubricant reservoir (12) is carried out by mechanical triggering.

6. Coupling hub according to at least one of the preceding claims, **characterized in that** a permanent lubricant cup which during operation impinges the lubricant with pressure is provided as the lubricant reservoir (12).

7. Coupling hub according to at least one of the preceding claims, **characterized in that** wear plates (17) are disposed on the roller journal (5).

8. Coupling hub according to Claim 7, **characterized in that** the wear plates (17) are disposed so as to be interchangeable.

## Revendications

1. Moyeu amovible pour un cylindre de travail d'un train de laminoir avec une géométrie de réception pour un tourillon de cylindre disposé coaxialement au cylindre de travail en vue de transmettre un couple de rotation d'un entraînement au cylindre de travail, dans lequel la liaison entre le tourillon de cylindre dans la géométrie de réception est réalisée sous la forme d'une liaison par emboîtement et/ou par adhérence, de telle manière qu'il soit prévu à l'intérieur du moyeu (1) un moyen (10) pour la lubrification de faces de contact (11) entre le tourillon de cylindre (5) et la géométrie de réception (6) du moyeu (1), dans lequel le moyen (10) présente un réservoir de lubrifiant (12) et **caractérisé en ce que** le réservoir de lubrifiant (12) est disposé à l'intérieur du moyeu (1).

2. Moyeu selon au moins une des revendications précédentes, **caractérisé en ce qu'**il est prévu à l'intérieur du moyen (1) des canaux de lubrifiant (13), qui conduisent du réservoir de lubrifiant (12) aux faces de contact (11).

3. Moyeu selon la revendication 1, **caractérisé en ce que** le moyen (10) comprend un réservoir de lubrifiant (12), qui peut être actionné au moins indirectement au moyen du tourillon de cylindre (5).

4. Moyeu selon la revendication 2, **caractérisé en ce que** le réservoir de lubrifiant (12) peut être rempli avec un autre réservoir de lubrifiant (15).

5. Moyeu selon au moins une des revendications précédentes, **caractérisé en ce que** la fourniture du lubrifiant à partir du réservoir de lubrifiant (12) est effectuée par déclenchement mécanique.

6. Moyeu selon au moins une des revendications précédentes, **caractérisé en ce qu'**il est prévu un godet de graissage permanent comme réservoir de lubrifiant (12), qui soumet le lubrifiant à une pression pendant le fonctionnement.

7. Moyeu selon au moins une des revendications précédentes, **caractérisé en ce que** des plaques d'usure (17) sont disposées sur le tourillon de cylindre (5).

8. Moyeu selon la revendication 7, **caractérisé en ce que** les plaques d'usure (17) peuvent être disposées de façon remplaçable.
